# EUROPÄISCHE PATENTSCHRIFT

(11) **EP 0 547 198 B1**
(45) Veröffentlichungstag und Bekanntmachung des Hinweises auf die Patenterteilung: **02.11.1995**
(21) Anmeldenummer: 92913755.2
(22) Anmeldetag: 30.06.1992
(51) Int. Cl.: A22C 15/00

(54) **VERFAHREN ZUM AUFHÄNGEN VON WÜRSTCHENKETTEN IN SCHLAUFEN SOWIE EINE VORRICHTUNG DAZU**
PROCESS AND DEVICE FOR HANGING SAUSAGE CHAINS IN LOOPS
PROCEDE ET DISPOSITIF DE SUSPENSION DE CHAINES DE SAUCISSES EN BOUCLES

(30) Priorität: 05.07.1991 DE 4122370
(43) Veröffentlichungstag der Anmeldung: 23.06.1993
(73) Patentinhaber: VEMAG Maschinenbau GmbH, D-27266 Verden (Aller) (DE)
(72) Erfinder: MARKWARDT, Klaus Dipl.-Ing, D-3014 Laatzen 1 (DE); RISTAU, Reinhardt, Kurt Dipl.-Ing., D-2810 Verden/Aller (DE); SPREHE, Ludger Dipl.-Ing., D-2841 Mühlen (DE)
(74) Vertreter: Eisenführ, Speiser & Partner
(86) Internationale Anmeldenummer: EP9201464
(87) Internationale Veröffentlichungsnummer: WO9300821

(56) Entgegenhaltungen:
- WO-A-88/07819
- DE-A- 3 137 276
- DE-U- 9 014 610
- FR-A- 2 404 402
- US-A- 3 430 831

## Beschreibung

Die Erfindung betrifft ein Verfahren zum Aufhängen von Würstchenketten in Schlaufen, bei dem aufeinanderfolgende, in einer im wesentlichen horizontalen Ebene umlaufende Haken an einer Übergabestelle jeweils eine dort in etwa senkrecht positionierte Abdrehstelle zwischen zwei Abschnitten der Würstchenkette erfassen und aus der die Übergabestelle durchsetzenden lotrechten Ebene gegebenenfalls getaktet herausbefördern, sowie eine entsprechende Vorrichtung dazu.

Würstchen werden üblicherweise mit Wurstfüllmaschinen in Form langer portionierter Würstchenketten hergestellt. Zwei benachbarte Würstchen sind dabei jeweils durch eine Abdrehstelle voneinander geteilt. Nachdem jeweils eine Würstchenkette in Schlaufen gelegt worden ist, wird ein Rauchspieß oder Rauchstock durch die Schlaufen hindurchgeschoben. Bei Naturdarmwürstchen werden diese bisher in Schlaufenform um den Rauchstock herumgewickelt. Die Würstchenkette wird dann in dieser Form auf einem Rauchwagen abgelegt, der anschließend in eine Räucherkammer gefahren wird. Beim Räuchern kommt es entscheidend darauf an, daß sich die Würstchen nicht berühren. Anderenfalls würden an den Berührungsstellen helle Flecken zurückbleiben, die nicht nur das Äußere der Würstchen ungünstig beeinflussen, sondern auch deren Haltbarkeit herabsetzen.

Es sind maschinelle Aufhängevorrichtungen (z.B. DE-P 27 44 350.1) bekannt, mit denen eine Würstchenkette nach dem Verlassen einer Füllmaschine automatisch in Schlaufen aufgehängt werden kann. Bei dieser bekannten Aufhängevorrichtung sind Haken an einer im wesentlichen in einer Horizontalebene umlaufende Endloskette befestigt. Weiterhin ist eine Zuführeinrichtung für die Würstchenkette vorgesehen, deren Auslaß im Raum oberhalb der Transportebene und senkrecht über einem von einem Aufnahmebereich der Haken überstrichenen Bereich mündet. Eine die Abdrehstellen der Würstchenkette abtastender Schalter befindet sich im Bewegungsbereich der Würstchenkette über der Transportebene und ist mit einer Steuereinrichtung für den Antrieb der Endloskette und/oder der Zuführeinrichtung verbunden. Die freien Endbereiche der Haken sind in zwei Ebenen V- oder U-förmig ausgebildet.

Die bekannten Aufhängevorrichtungen sind jedoch nur für solche Würstchen geeignet, die mit Kunstdärmen hergestellt sind. Diese Würstchen haben nämlich für ihre weitere Verarbeitung bestimmte vorteilhafte Eigenschaften, die die mit Naturdärmen hergestellten Würstchen nicht aufweisen: ihr Durchmesser und ihre Länge sind weitestgehend konstant, sie haben entweder keine oder - bei entsprechender Vorbehandlung des Darmes - eine gleichmäßige Krümmung, eine gute Gleitfähigkeit und eine geringe Empfindlichkeit gegen mechanische Beanspruchungen.

Naturdarm-Würstchen weisen demgegenüber veränderliche Durchmesser und Längen auf. Entscheidend ist, daß sie üblicherweise ihre natürliche Krümmung haben und daß diese Krümmung unterschiedlich stark ausfällt. Weiterhin ist ihre Gleitfähigkeit schlecht und ihre Empfindlichkeit gegen mechanische Beanspruchungen relativ groß.

Aufgrund dieser unterschiedlichen Eigenschaften sind die bisher bekannten Aufhängevorrichtungen für Würstchen aus Naturdärmen praktisch nicht geeignet. Insbesondere könnte nicht verhindert werden, daß sich die aufgehängten Würstchen wegen ihrer Krümmung teilweise berühren, so daß diese Stellen nur ungenügend oder gar nicht geräuchert würden und damit sowohl die Haltbarkeit herabgesetzt, als auch von der äußeren Erscheinung her aufgrund der hellen Stellen ein optisch unbefriedigendes Ergebnis erzielt würde.

Der Erfindung liegt deshalb die Aufgabe zugrunde, ein Verfahren nebst Vorrichtung zum Aufhängen von Würstchenketten in Schlaufen anzugeben, bei denen auch Naturdarmwürstchen verarbeitet und zur Übergabe auf einen Rauchstock positioniert werden können.

Die Lösung dieser Aufgabe erfolgt verfahrensgemäß durch die Merkmale des Anspruchs 1 sowie als Vorrichtung durch die Merkmale des Anspruchs 9.

Bei einem Verfahren zum Aufhängen von Würstchenketten in Schlaufen, bei dem aufeinanderfolgende, in einer im wesentlichen horizontalen Transportebene umlaufende Haken an einer Übergabestelle jeweils eine dort etwa senkrecht positionierte Abdrehstelle zwischen zwei Abschnitten der Würstchenkette erfassen und aus der die Übergabestelle durchsetzenden, lotrechten Ebene gegebenenfalls getaktet herausbefördern, wird der Abstand der vorlaufenden Abdrehstelle jedes Abschnittes von der nachlaufenden Abdrehstelle auf dem Haken in Transportrichtung zumindest im Bereich der Übergabestelle so groß eingestellt, daß jedes der natürlich gekrümmten Würstchen in dem zwischen jeweils zwei Haken befindlichen Abschnitt der Würstchenkette eine rotationsstabile Lage in Bezug auf die es begrenzenden beiden Abdrehstellen verbindende Gerade einnimmt, und die Abdrehstelle dann am in Transportrichtung gesehen vorderen Ende des Abschnittes um eine etwa lotrechte Achse um in der Größenordnung von 90° in vorbestimmter Drehrichtung verdreht.

Vorteilhafterweise wird dabei die lotrechte Achse beim Drehen parallel zu sich selbst in Richtung auf das freie Hakenende bewegt.

Die Drehbewegung kann durch eine abwärts gerichtete Bewegung der am vorlaufenden Ende des Abschnittes befindlichen Abdrehstelle bewirkt und/oder unterstützt werden.

Die Einleitung der Abwärtsbewegung erfolgt dabei durch Verschieben der Abdrehstelle auf eine schiefe Ebene.

Zur Bildung einer ausreichend großen Durchstecköffnung für den Rauchspieß werden ferner die Würstchen beiderseits der genannten Abdrehstelle gegen Ende oder nach der Verdrehbewegung mindestens in der Nähe der Abdrehstelle voneinander abgespreizt.

Die Abdrehstelle kann auch mittels mindestens einer schiefen Ebene auf einem Räucherspieß positioniert werden. Zu diesem Zweck kann die schiefe Ebene durch Verdrehung eines die Abdrehstelle tragenden Teils eines Abgabebereiches des Hakens um eine im wesentlichen horizontale Achse erzeugt werden.

Die Lösung der Aufgabe erfolgt für eine aus der DE-P 27 44 350.1 bekannte Aufhängevorrichtung dadurch, daß der Abstand der vorlaufenden Abdrehstelle jedes Abschnittes von der nachlaufenden Abdrehstelle auf den Haken in Förderrichtung zumindest im Bereich der Übergabestelle so groß ist, daß jedes der natürlich gekrümmten Würstchen in dem zwischen jeweils zwei Haken befindlichen Abschnitt der Würstchenkette eine rotationsstabile Lage in Bezug auf die es begrenzenden beiden Abdrehstellen verbindende Gerade einnimmt, daß die Haken, ausgehend von ihrem einer Transportkette zugeordneten Befestigungselement, einem in Draufsicht im wesentlichen senkrecht zur Transportrichtung verlaufenden Aufnahmebereich zur Aufnahme einer Abdrehstelle sowie einen in Draufsicht im wesentlichen um 90° dazu in oder entgegen der Transportrichtung abgewinkelten Abgabebereich aufweisen, und daß eine Einrichtung zum Verschieben der Abdrehstelle von dem Aufnahmebereich in den Abgabebereich vorgesehen ist.

Der Haken weist vorzugsweise mindestens eine erste, abwärts laufende schiefe Ebene auf, die zwischen dem Abgabebereich und dem Aufnahmebereich liegt und in Richtung auf das offene Ende des Abgabebereiches in Draufsicht auf den Haken so abgewinkelt sein kann, daß die darübergeführte Abdrehstelle (nur) einen Teil ihrer Drehbewegung erfährt.

Ferner kann eine zweite schiefe Ebene vorgesehen sein, die sich an die erste schiefe Ebene anschließt, im wesentlichen senkrecht nach unten verläuft und in den Abgabebereich überleitet.

Der Aufnahmebereich weist vorzugsweise eine in Transportrichtung des Hakens wirkende Fangstelle für eine Abdrehstelle auf und ist zur ersten schiefen Ebene durch einen nach oben gerichteten Höcker abgeschlossen.

Der Abgabebereich weist vorzugsweise einen sich in Transportrichtung erstreckenden Zinken zur Aufnahme einer Abdrehstelle auf, der zur Verhinderung eines unbeabsichtigten Abrutschens der Abdrehstelle in Richtung auf sein freies Ende leicht ansteigt. Unterhalb und beiderseits des für die Aufnahme der Abdrehstelle vorgesehenen Teils des Abgabebereiches können sich Spreizelemente befinden. Die Spreizelemente sind vorzugsweise die unteren Schenkel von L-förmigen Gebilden, deren Hauptebenen dachförmig mit der Firstlinie in Transportrichtung verlaufend angeordnet sind, wobei der First oberhalb des Zinkens verläuft und die freien L-Schenkel beiderseits und unterhalb des Zinkens liegen.

Es kann ferner mindestens ein Abweiser vorgesehen sein, der sich, ausgehend vom Aufnahmebereich, in Richtung auf die Transportkette in Transportrichtung hinter sowohl den Aufnahme- als auch den Abgabebereich erstreckt, um eine Pendelbewegung von Teilen der Würstchenkette in Transportrichtung hinter dem Aufnahmebereich zu begrenzen.

Der Haken ist ferner parallel zur Transportrichtung gesehen im wesentlichen in Form eines nach unten offenen U gestaltet, an dessen einem Schenkel das Befestigungselement und an dessen anderem Schenkel sich der Abgabebereich befindet. Der Aufnahmebereich ist im Bereich des Steges des U vorgesehen.

Der Haken ist vorzugsweise um eine senkrecht zur Transportrichtung verlaufende Horizontalachse in der Richtung kippbar, in die der Abgabebereich abgewinkelt ist, so daß eine sich im Abgabebereich befindende Abdrehstelle vom Haken abrutschen kann.

Vorteilhafterweise ist im Bereich der Übergabestelle eine Lichtschranke vorgesehen, mit der eine Abdrehstelle der von der Zuführeinrichtung zugeführten Würstchenkette erfaßt wird, und mit der eine Steuervorrichtung angesteuert wird, die entweder den Umlauf der Haken oder die Zuführeinrichtung beeinflußt.

Die Einrichtung zur Verschiebung einer Abdrehstelle vom Aufnahmebereich eines Hakens in seinem Abgabebereich weist vorzugsweise einen zwischen zwei Positionen etwa senkrecht zur Förderrichtung pneumatisch o. dgl. bewegbaren Bügel auf, der taktweise jedesmal dann ausfährt, wenn ein Haken durch seinen Wirkungsbereich geführt wird.

Bei einer Ausführungsform, bei der die Haken an einer Endloskette befestigt sind, welche über zwei Umlenkräder geführt ist, von denen eines angetrieben wird, kann die Zuführeinrichtung entlang des Umfanges eines Rades verschiebbar angeordnet sein, um die Lage der Übergabestelle mit Bezug auf die passierenden Haken festzulegen.

Die erfindungsgemäße Lösung, die für im Naturdarm abgefüllte Würstchen und Würste größeren Kalibers gleichermaßen geeignet ist, führt somit zur Bildung einer fortlaufenden Spirale, in die sich die natürliche Darm- bzw. Würstchenkrümmung einfügt. Gleichzeitig bleibt natürlich die Verarbeitung von Kunstdarmwürstchen möglich.

Weitere Einzelheiten, Merkmale und Vorteile der Erfindung ergeben sich aus der nachfolgenden Beschreibung eines Ausführungsbeispiels anhand der Zeichnung. Es zeigt:
- Fig. 1: eine schematische Draufsicht auf eine Ausführungsform einer Aufhängevorrichtung,
- Fig. 2: einen Haken in Draufsicht,
- Fig. 3: eine Darstellung eines Hakens von vorne, d.h. in Richtung auf seinen Befestigungspunkt,
- Fig. 4: eine Zuführeinrichtung in schematischer Teildarstellung mit einem Haken und einem Teil einer Transportkette,
- Fig. 5: eine vergrößerte Darstellung des in Fig. 1 mit "A" bezeichneten Bereiches der Vorrichtung,
- Fig. 6: eine andere Ausführungsform eines Hakens in einer Ansicht entgegen der Transportrichtung,
- Fig. 7: eine Darstellung des Hakens gemäß Fig. 6 von vorne, d.h. in Richtung auf seinen Befestigungspunkt und
- Fig. 8: den Haken gemäß Fig. 6 in Draufsicht.

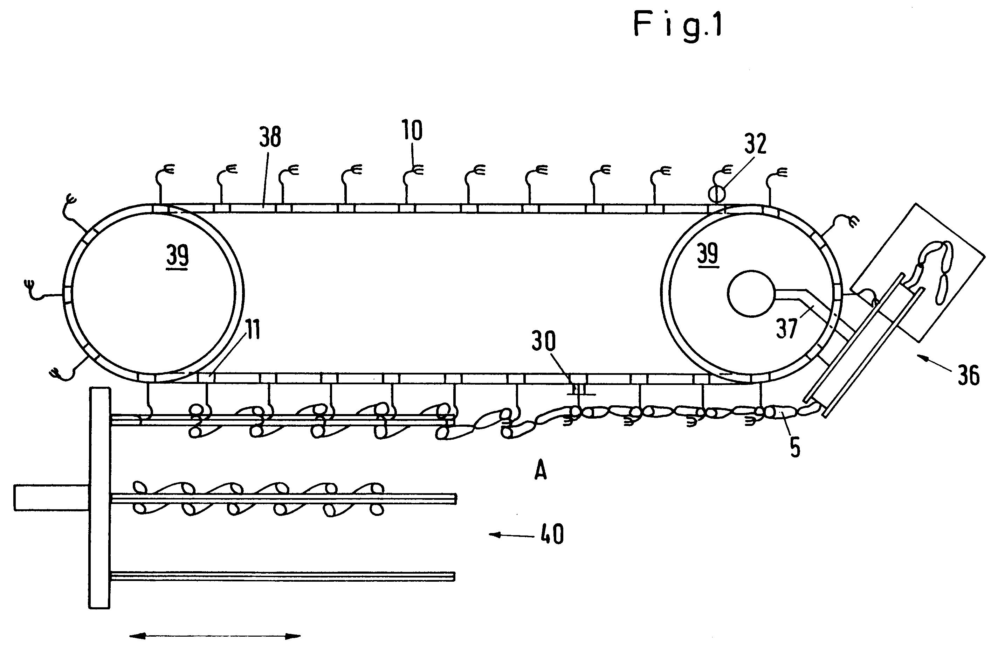

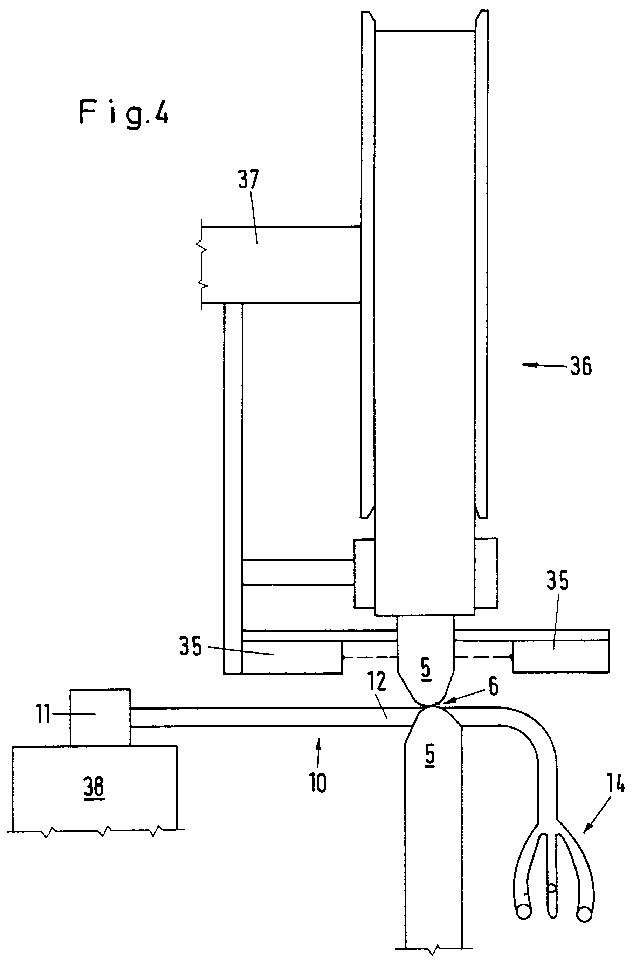

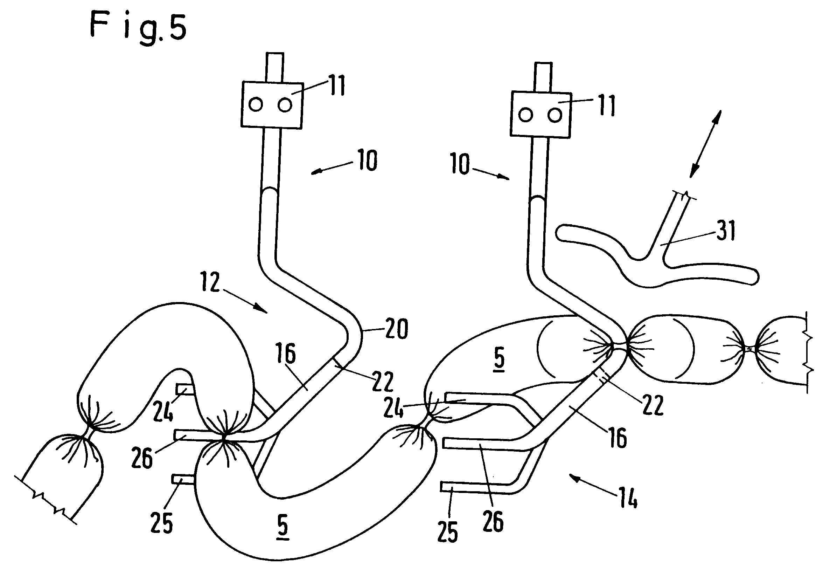

Bei dem in Fig. 1 gezeigten Ausführungsbeispiel wird eine Endloskette 38 über zwei Umlenkräder 39 geführt, von denen eines angetrieben ist. In regelmäßigen Abständen sind an der Endloskette Haken 10 angebracht, die an einer Übergabestelle an einer Zuführeinrichtung 36 jeweils einen Abschnitt einer Würstchenkette erfassen. Der Transport der Kette erfolgt gegebenenfalls getaktet durch die Signale einer von einer Lichtschranke 35 (Fig. 4) angesteuerten Steuereinrichtung. Die Lichtschranke spricht auf Abdrehstellen der von der Zuführeinrichtung 36 zugeführten Wurstkette an. Die Haken werden an einer Einrichtung 30 vorbeigeführt, die eine jeweils in einem Aufnahmebereich 12 jedes Hakens 10 liegende Abdrehstelle mittels eines Bügels 31 in einen Abgabebereich 14 des Hakens verschiebt (siehe Fig. 5). Während dieser Bewegung erfolgt gleichzeitig eine Drehung der Abdrehstelle um etwa 90°, wodurch die Würstchenkette in eine Spiralform gebracht wird und - wie in Fig. 1 zu erkennen - eine Durchstecköffnung für einen Rauchspieß 40 entsteht. Die spiralförmig aufgehängte Würstchenkette wird weiter über den Rauchspieß gefördert. Erreicht der den Würstchenkettenanfang tragende Haken das in Förderrichtung gelegene Ende des Rauchspießes, so wird der Haken um eine im wesentlichen horizontale, zur Förderrichtung senkrecht liegende Achse um etwa 90° gedreht, so daß die Abdrehstelle auf den Rauchspieß rutscht. Dies geschieht z.B. während einer Phase, in der das Band ruht. Während des nächsten Fördertaktes wird dann die nächste Abdrehstelle entsprechend der Fördertaktweite in Richtung auf die abgelegte Abdrehstelle zu bewegt und während der nächsten Bewegungspause in gleicher Weise auf dem Rauchspieß 40 abgelegt. Die Entfernung zwischen zwei abgelegten Abdrehstellen kann dabei durch entsprechende (getaktete) Bewegung des Rauchspießes in Transportrichtung des Bandes oder entgegengesetzt zu dieser verändert werden.

Die Zuführeinrichtung 36 wird durch ein um eine horizontale Achse oberhalb der horizontalen Transportebene drehbares Aufgaberad gebildet, von dem aufeinanderfolgende Würstchen, bzw. Abdrehstellen 6 im wesentlichen senkrecht in den in der Transportebene liegenden Bereich der Übergabestelle gefördert werden. Das Aufgaberad ist über einem Arm 37 im Drehpunkt eines der Umlenkräder 39 drehbar gelagert und entlang des Umfangs des Rades verschwenkbar. Durch Schwenkung des Aufgaberades wird die Lage der Übergabestelle mit Bezug auf die passierenden Haken festgelegt. Außerdem wird durch die Lichtschranke und durch die Steuereinrichtung für das Aufgaberad die benötigte Position für die aus dem Aufgaberad austretenden Abdrehstellen gewährleistet. Auf diese Weise wird sichergestellt, daß trotz schlechter Gleitfähigkeit der Würstchen immer eine Abdrehstelle im Aufnahmebereich 12 eines passierenden Hakens 10 zu liegen kommt.

Die Abstände der Befestigungspunkte der einzelnen Haken an der Endloskette 38 sind in Grenzen abhängig von der Länge der einzelnen Würstchen. Dieser Abstand muß empirisch so festgelegt werden, daß sich in der Spirale hängende Würstchen nicht berühren können.

Um die Spiralform zu erzeugen, in der die natürliche Krümmung der einzelnen Würstchen der Spirallinie folgt, wird wie folgt vorgegangen:
Bei der Übergabe wird die bei der Zufuhr zur Übergabestelle zunächst ungefähr senkrecht zugeförderte Würstchenkette abschnittsweise seitlich ausgelenkt, indem die vorlaufende, abschnittsbegrenzende Abdrehstelle eines jeden Abschnitts von jeweils einem Haken 10 seitlich verlagert wird, während die das jeweilige Abschnittsende begrenzende Abdrehstelle nachgefördert wird, so daß sich die jeweils beiden, einen Abschnitt zwischen sich einschließenden Abdrehstellen schließlich ungefähr auf derselben Höhe befinden. Während des seitlichen Auslenkens der einzelnen Abschnitte der Würstchenkette nehmen die natürlich gekrümmten Würstchen eines jeden Abschnittes aufgrund der Schwerkraft eine rotationsstabile Lage um die Raumachse ein, die durch die das Würstchen begrenzenden Abdrehstellen verläuft. Der zum Ausrichten der Würstchen verfügbare Einfluß der Schwerkraft ist um so größer, je stärker jeder Abschnitt der Würstchenkette in der Waagerechten gestreckt wird. Eine stärkere Streckung der einzelnen Abschnitte der Würstchenkette ist gleichbedeutend mit einem größeren Abstand der Aufnahmebereiche 12 zweier aufeinanderfolgender Haken 10. Dieser Abstand ist dort, wo die Endloskette 38 über die Umlenkräder 39 verläuft, größer als in den Bereichen, in denen die Kette geradlinig geführt ist, so daß bei der Übergabe eines Abschnittes der Würstchenkette in dem bogenförmigen Verlauf der Endloskette der Einfluß der Schwerkraft zum Ausrichten eines jeden Würstchens besonders groß ist. Dies hat zur Folge, daß das Ausrichten der Würstchen in ihre rotationsstabile Lage entsprechend schnell und sicher abläuft.

Nach Erreichen der rotationsstabilen Lage der Würstchen können die Abstände der Aufnahmebereiche 12, in denen jeweils eine Abdrehstelle ruht, auch etwas kleiner sein. Dies ist in den gradlinig geführten Bereichen der Endloskette 38 der Fall, da die Haken dort näherungsweise parallel zueinander liegen. Es muß jedoch sichergestellt bleiben, daß sich benachbarte Würstchen insbesondere nach Ablage auf dem Rauchspieß 40 nicht berühren.

In der Zeichnung ist weiterhin ein Näherungsschalter 32 dargestellt, der Signale erzeugt, wenn ein von der Endloskette bewegter Haken in seinen Wirkungsbereich gelangt. Die Signale werden in der Steuereinrichtung verarbeitet und können nach einem Anhalten der Endloskette zur Wiederherstellung der Synchronisation zwischen Kette und Zuführeinrichtung dienen.

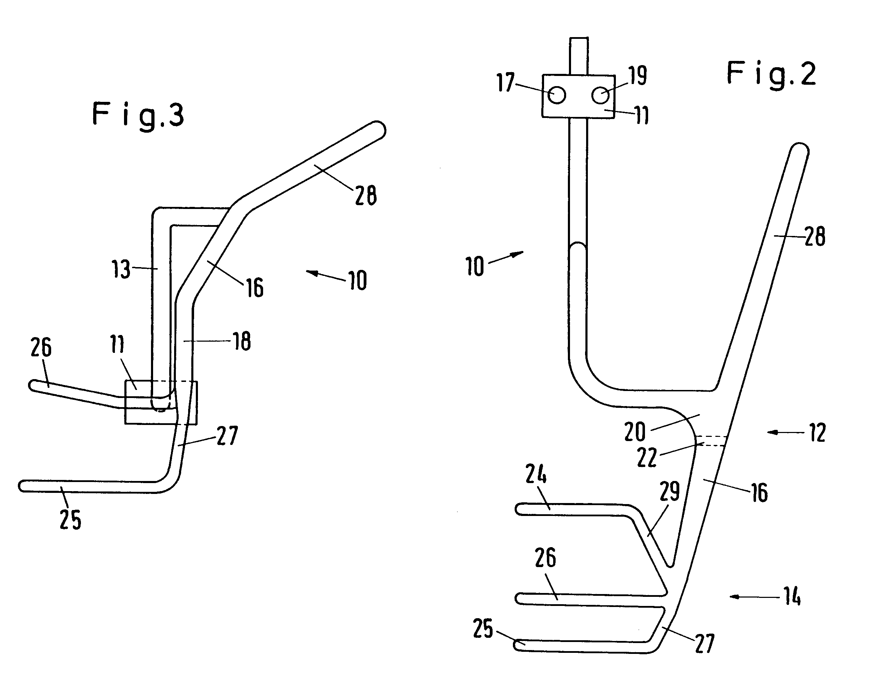

In Fig. 2 ist der Haken 10 in Draufsicht dargestellt. Ein Befestigungselement 11 dient zur Befestigung des Hakens an der Endloskette 38. Der Haken ist in den Aufnahmebereich 12 und den Abgabebereich 14 unterteilt. Er weist ferner einen von dem Aufnahmebereich ausgehenden Abweiser 28 auf, der sich in Transportrichtung sowohl hinter den Aufnahme- als auch hinter den Abgabebereich in Richtung auf die Transportkette erstreckt und verhindern soll, daß Teile von Würstchenketten in Transportrichtung hinter dem Aufnahmebereich pendeln. Der Aufnahmebereich 12 weist eine Fangstelle 20 auf, mit der ein sicheres Erfassen einer Abdrehstelle gewährleistet wird. Die Fangstelle weitet sich in Transportrichtung auf und bildet einen stetigen Übergang mit den angrenzenden Bereichen des Hakens. Da der Haken aus Rundmaterial gefertigt ist, wird in Verbindung mit einem relativ großen Krümmungsradius des die Fangstelle bildenden Bereiches des Hakens gewährleistet, daß auch die Naturdarmwürstchen trotz ihres schlechten Gleitvermögens problemlos in dem Aufnahmebereich aufgenommen werden.

Der Aufnahmebereich ist in Richtung auf den Abgabebereich durch einen nach oben gerichteten Höcker 22 begrenzt. Dieser Höcker verhindert ein vorzeitiges Abrutschen einer in dem Aufnahmebereich ruhenden Abdrehstelle. Der Bereich zwischen dem Höcker 22 und dem Abgabebereich 14 wird durch eine erste und eine zweite, jeweils nach unten gerichtete schiefe Ebene 16, 18 gebildet, die beide auch in Fig. 3 dargestellt sind. Die erste schiefe Ebene 16 ist dabei entsprechend Fig. 2 in Richtung auf die freien Enden des Abgabebereiches abgewinkelt. Die zweite schiefe Ebene verläuft senkrecht nach unten und endet im Abgabebereich 14 des Hakens. Auch diese Bereiche haben im Hinblick auf eine kontinuierliche Bewegung der an sich schlecht gleitenden Naturdarmwürstchen ausschließlich stetige Übergänge, insbesondere beiderseits und einschließlich des Höckers 22, sowie Biegungen mit ausreichend großen Krümmungsradien.

In Fig. 3 ist ferner das Befestigungselement 11 sowie ein sich daran mit einem horizontalen Abstand anschließender senkrecht aufsteigender Bereich 13 gezeigt, an dessen oberes Ende sich der annäherend horizontale Aufnahmebereich anschließt.

Auf den beiden sich hieran anschließenden schiefen Ebenen wird die von dem Haken getragene Drehstelle um eine sich parallel verschiebende Vertikalachse um etwa 90° verdreht abwärts geführt und auf einem Zinken 26 des Abgabebereiches abgelegt. Die Bewegung der Abdrehstelle entlang der schiefen Ebene verringert deutlich die Reibung zwischen Naturdarm und Haken, wodurch auch das beschriebene Verdrehen der Abdrehstelle ohne Beschädigungsgefahr für den Naturdarm ermöglicht wird.

Durch die Drehung wird die gewünschte Spiralform der Würstchenkette aufgebaut und die Durchstecköffnung für den Rauchspieß geschaffen. Dies wird unterstützt durch Spreizelemente 24, 25, die unterhalb und beidseitig des Zinkens 26 angeordnet sind und in Draufsicht im wesentlichen parallel zu diesem verlaufen. Mit den Spreizelementen werden die sich an die Abdrehstelle anschließenden Bereiche der Würstchen auseinandergehalten. Die Spreizelemente sind die unteren Schenkel von vorzugsweise L-förmigen Gebilden, deren Hauptebenen dachförmig mit der Firstlinie in Transportrichtung verlaufend angeordnet sind. Die Firstlinie verläuft oberhalb des Zinkens 26.

Von der Stelle 23, an der die gedachte Firstlinie den Haken durchsetzt, verlaufen die anderen Schenkel 27, 29 der beiden L-förmigen Gebilde unter einem spitzen Winkel zueinander nach unten und außen. Das in Transportrichtung rückwärtige Ende des Zinkens sowie die Schenkel 27, 29 werden von einer gemeinsamen, dreiecksförmigen und dem Dachquerschnitt in ihren Abmessungen entsprechenden Stirnwand abgeschlossen, die in den Zeichnungen nicht dargestellt ist. Die Wand geht in ihren den Dachschrägen entsprechenden Randbereichen stetig in die dort zum First laufenden L-Schenkel 27, 29 über und dient als Abweiser für Teile von Abschnitten der Würstchenkette.

Zur Verhinderung eines vorzeitigen Abrutschens der Abdrehstelle vom Abgabebereich während des (getakteten) Weitertransportes eines Hakens ist ein Teil des Zinkens 26 vor seinem freien Ende leicht nach oben angewinkelt. Zinken und Spreizelemente bestehen ebenfalls aus Rundmaterial und weisen abgerundete Stirnflächen auf, so daß die Gefahr eines Hängenbleibens einer Abdrehstelle beim Abrutschen vom Abgabebereich ausgeschlossen wird.

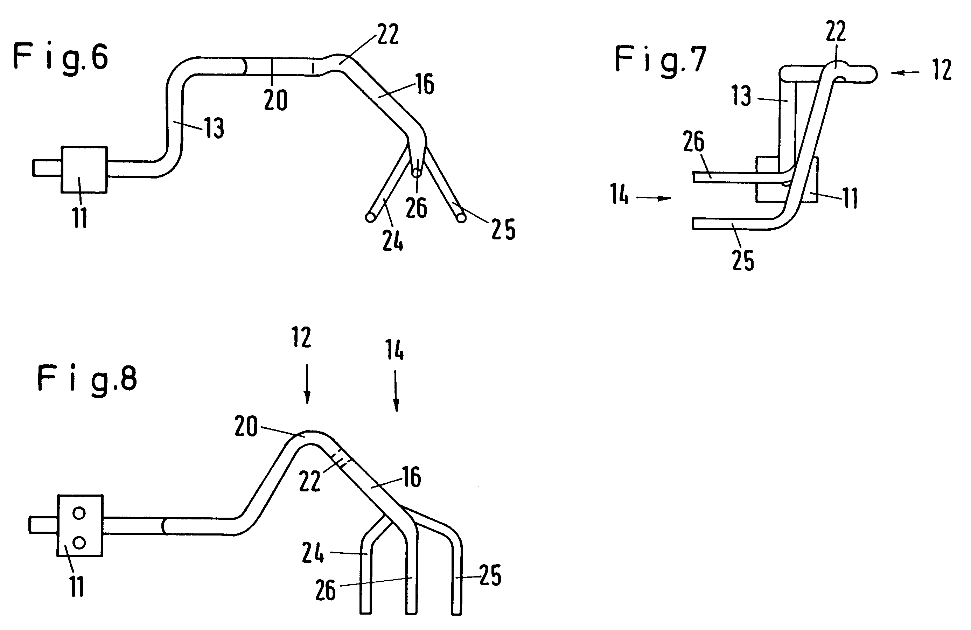

Der Haken 10 selbst ist gemäß Fig. 6 näherungsweise in Form eines nach unten offenen U ausgebildet, an dessen einen Schenkel das Befestigungselement 11 angesetzt ist und an dessen anderem Schenkel der Abgabebereich 14 vorgesehen ist. Der Aufnahmebereich 12 befindet sich im Bereich des Steges des U. Das Befestigungselement 11 und der Auflagebereich der Abdrehstelle auf dem Zinken 26 liegen auf einer gemeinsamen horizontalen und senkrecht zur Transportrichtung verlaufenden Achse (Fig. 3 und 6). Aufgrund dieser Gestaltung kann die erforderliche Bauhöhe der Vorrichtung gering gehalten werden.

Das Befestigungselement 11 ist in Form eines Quaders ausgebildet, in dem der Haken mit einem horizontalen Endabschnitt 15 um die genannte Achse drehbar gelagert ist. Mindestens in seiner in Fig. 5 gezeigten Arbeitsstellung ist der Haken mittels einer Rastvorrichtung gesichert. Im übrigen weist der Quarder 11 beiderseits der Endabschnitte 15 zwei senkrecht zu diesem verlaufenden Bohrungen 17, 19 zur Aufnahme von Befestigungsbolzen der Endloskette auf.

Fig. 4 zeigt den Bereich, in dem eine Würstchenkette abschnittsweise dem an der Endloskette 38 befestigten Haken 10 übergeben wird (Übergabestelle). Erkennbar ist auch die Lage der Lichtschranken 35 - 35 oberhalb des Aufnahmebereiches 12 der Haken 10.

Fig. 5 zeigt in Draufsicht den Bereich des Transportweges, in dem eine Abdrehstelle von dem Aufnahmebereich 12 des Hakens 10 in seinen Abgabebereich 14 verschoben wird. Insbesondere ist ein Bügel 31 der Einrichtung zur Verschiebung 30 dargestellt, durch dessen Bewegung in Richtung des Pfeiles gegen die unterhalb des Aufnahmebereiches liegenden Abschnitte eines Würstchenpaares deren gemeinsame Abdrehstelle über den Höcker 22 geschoben und die Abwärts- bzw. Drehbewegung über die erste und zweite schiefe Ebene 16, 18 eingeleitet wird. Die Abdrehstelle gelangt dann, wie im linken Teil der Darstellung gezeigt, in den Abgabebereich und legt sich auf den Zinken 26. Die Spreizelemente 24, 25 gewährleisten daher, daß die bereits aufgrund der Verdrehung geschaffene Durchstecköffnung für einen Räucherspieß ausreichend groß ist.

Fig. 6 zeigt eine andere Ausführungsform des Hakens 10 in einer Ansicht entgegen der Transportrichtung. Bei dieser Darstellung wird insbesondere die Ausformung des Höckers 22 deutlich, der stetig in die angrenzenden Bereiche übergeht und dessen Krümmungsradien relativ groß gewählt sind, so daß, wie oben beschrieben, in jedem Fall ein störungsfreies Herüberschieben einer Abdrehstelle möglich ist. Der erste senkrechte Abschnitt 13 des Hakens ist gemäß Fig. 7 so bemessen, daß der Ablagebereich des Zinkens 26 auf einer durch das Befestigungselement 11 horizontal und senkrecht zur Transportrichtung verlaufenden Achse liegt.

Ein Abweiser ist bei dieser Ausführungsform nicht vorgesehen. Der Aufnahmebereich ist gemäß Fig. 8 in Form eines in Transportrichtung sich öffnenden V ausgebildet. Die Fangstelle 20 ist widerum mit ausreichend großem Krümmungsradius ausgeformt und geht stetig in die benachbarten Bereiche über. Sie wird in Richtung auf den Abgabebereich durch den Höcker 22 begrenzt.

An den Höcker 22 schließt sich die nach unten geneigte erste schiefe Ebene 16 an, die wiederum - von oben gesehen - in die Richtung abgewinkelt ist, in die die freien Enden des Abgabebereiches 14 weisen. Die Spreizelemente 24, 25 sind in ähnlicher Weise wie bei der oben beschriebenen Ausführungsform seitlich und unterhalb des Zinkens 26 angeordnet.

## Patentansprüche

1. Verfahren zum Aufhängen von Würstchenketten in Schlaufen, bei dem aufeinanderfolgende, in einer im wesentlichen horizontalen Transportebene umlaufende Haken an einer Übergabestelle jeweils eine dort etwa senkrecht verlaufende Abdrehstelle zwischen zwei Abschnitten der Würstchenkette erfassen und aus der die Übergabestelle durchsetzenden lotrechten Linie gegebenenfalls getaktet herausbefördern,
dadurch gekennzeichnet,
daß der Abstand zwischen zwei, jeweils einen Abschnitt zwischen sich einschließenden Abdrehstellen, die auf Aufnahmebereichen der Haken liegen, in Transportrichtung zumindest im Bereich der Übergabestelle so eingestellt wird, daß jedes der natürlich gekrümmten Würstchen in dem zwischen jeweils zwei Haken befindlichen Abschnitt der Würstchenkette unter Schwerkrafteinfluß eine rotatiansstabile Lage um die Raumachse einnimmt, die durch die beiden, das jeweilige Würstchen begrenzenden Abdrehstellen verläuft, und
daß dann die Abdrehstelle am in Transportrichtung gesehen vorderen Ende des Abschnittes um eine etwa lotrechte Achse um einen Winkel in der Größenordnung von 90° in vorbestimmter Drehrichtung verdreht wird.

2. Verfahren nach Anspruch 1,
dadurch gekennzeichnet, daß der Abstand der vorlaufenden Abdrehstelle jedes Abschnittes von der nachlaufenden Abdrehstelle auf den Haken nach Verlassen des Bereiches der Übergabestelle verringert wird.

3. Verfahren nach Anspruch 1 oder 2,
dadurch gekennzeichnet, daß die lotrechte Achse beim Drehvorgang parallel zu sich selbst in Richtung auf das freie Hakenende bewegt wird.

4. Verfahren nach mindestens einem der vorhergehenden Ansprüche,
dadurch gekennzeichnet, daß die Verdrehbewegung durch eine abwärts gerichtete Bewegung der am vorlaufendem Ende des Abschnittes befindlichen Abdrehstelle bewirkt und/oder unterstützt wird.

5. Verfahren nach Anspruch 4,
dadurch gekennzeichnet, daß die abwärts gerichtete Bewegung durch Verschieben der Abdrehstelle auf eine schiefe Ebene eingeleitet wird.

6. Verfahren nach mindestens einem der vorhergehenden Ansprüche,
dadurch gekennzeichnet, daß die Würstchen beiderseits der genannten Abdrehstelle gegen Ende oder nach der Verdrehbewegung mindestens in der Nähe der Abdrehstelle voneinander abgespreizt werden, um eine ausreichend große Durchstecköffnung für einen Rauchspieß zu gewährleisten.

7. Verfahren nach mindestens einem der vorhergehenden Ansprüche,
dadurch gekennzeichnet, daß die Abdrehstelle mittels mindestens einer weiteren schiefen Ebene auf dem Rauchspieß abgelegt wird.

8. Verfahren nach Anspruch 7,
dadurch gekennzeichnet, daß die weitere schiefe Ebene durch Verdrehung eines die Abdrehstelle tragenden Teils eines Abgabegereiches des Hakens um eine näherungsweise horizontale Achse erzeugt wird.

9. Vorrichtung zum Aufhängen von Würstchenketten in Schlaufen, mit
- aufeinanderfolgenden, in einer horizontalen Ebene umlaufenden Haken,
- einer Zuführeinrichtung zur Zuführung von etwa senkrecht positionierten, zwischen zwei Abschnitten einer Würstchenkette befindlichen Abdrehstellen zu einer Übergabestelle, an der diese von einem Haken erfaßt werden,
- einer Steuereinrichtung zur zeitlichen Steuerung der Zuführeinrichtung und/oder des Umlaufes der Haken in der Weise, daß jede gewünschte Abdrehstelle der Würstchenkette von jeweils einem Haken erfaßt wird,
dadurch gekennzeichnet, daß
- der Abstand zwischen zwei, jeweils einen Abschnitt zwischen sich einschließenden Abdrehstellen, die auf den Haken (10) liegen, in Transportrichtung zumindest im Bereich der Übergabestelle so groß ist, daß jedes der natürlich gekrümmten Würstchen (5) in dem zwischen jeweils zwei Haken befindlichen Abschnitt der Würstchenkette unter Schwerkrafteinfluß eine rotationsstabile Lage um die Raumachse einnimmt, die durch die beiden, das jeweilige Würstchen begrenzenden Abdrehstellen verläuft,
- die Haken (10), ausgehend von ihrem einer Transportkette zugeordneten Befestigungselement (11), einen in Draufsicht im wesentlichen senkrecht zur Transportrichtung verlaufenden Aufnahmebereich (12) zur Aufnahme einer Abdrehstelle sowie einen in Draufsicht im wesentlichen um 90° dazu, in oder entgegen der Transportrichtung abgewinkelten Abgabebereich (14) aufweisen, und daß
- eine Einrichtung (30) zum Verschieben der Abdrehstelle von dem Aufnahmebereich (12) in den Abgabebereich (14) vorgesehen ist.

10. Vorrichtung nach Anspruch 9,
dadurch gekennzeichnet, daß der Haken (10) zwischen dem Aufnahmebereich (12) und dem Abgabebereich (14) mindestens eine erste, abwärts laufende schiefe Ebene (16) aufweist.

11. Vorrichtung nach Anspruch 10,
dadurch gekennzeichnet, daß die erste schiefe Ebene (16) in Draufsicht des Hakens in die Richtung abgewinkelt ist, in die auch der Abgabebereich (14) abgewinkelt ist, und zwar in der Weise, daß die von dem Aufnahmebereich zu dem Abgabebereich geführte Abdrehstelle durch die erste schiefe Ebene (16) nur einen Teil ihrer Drehbewegung erfährt.

12. Vorrichtung nach Anspruch 10,
dadurch gekennzeichnet, daß der Haken (10) im Anschluß an die erste schiefe Ebene (16) eine zweite schiefe Ebene (18) aufweist, die steiler abwärts führt, als die erste schiefe Ebene (16) und an die sich der Abgabebereich (14) anschließt.

13. Vorrichtung nach Anspruch 12,
dadurch gekennzeichnet, daß die zweite schiefe Ebene (18) lotrecht verläuft.

14. Vorrichtung nach mindestens einem der Ansprüche 9 bis 13,
dadurch gekennzeichnet, daß der Aufnahmebereich (12) eine in Transportrichtung des Hakens (10) wirkende Fangstelle (20) für eine Abdrehstelle aufweist.

15. Vorrichtung nach Anspruch 14,
dadurch gekennzeichnet, daß die Fangstelle (20) in Draufsicht durch einen gekrümmten, in Transportrichtung sich etwa trichterförmig erweiternden Bereich des Hakens gebildet wird.

16. Vorrichtung nach mindestens einem der Ansprüche 9 bis 15,
dadurch gekennzeichnet, daß der Aufnahmebereich (12) des Hakens (10) in Richtung auf die erste schiefe Ebene (16) durch einen nach oben gerichteten Höcker (22) abgeschlossen ist.

17. Vorrichtung nach mindestens einem der Ansprüche 9 bis 16,
dadurch gekennzeichnet, daß der Abgabebereich (14) einen sich in Transportrichtung erstreckenden Zinken (26) zur Aufnahme einer Abdrehstelle aufweist, der in Richtung auf sein freies Ende leicht ansteigt.

18. Vorrichtung nach mindestens einem der Ansprüche 9 bis 17,
dadurch gekennzeichnet, daß der Abgabebereich (14) Spreizelemente (24, 25) aufweist, die unterhalb des für die Aufnahme der Abdrehstelle vorgesehenen Teils des Abgabebereichs (Zinken 26) und beiderseits davon angeordnet sind.

19. Vorrichtung nach Anspruch 18,
dadurch gekennzeichnet, daß die Spreizelemente (24, 25) die unteren Schenkel von L-förmigen Gebilden sind, die dachförmig mit der Firstlinie in Förderrichtung über den Zinken (26) verlaufend angeordnet sind.

20. Vorrichtung nach mindestens einem der Ansprüche 9 bis 19,
gekennzeichnet durch mindestens einen Abweiser (28), der vom Aufnahmebereich (12) ausgeht und sich in Draufsicht des Hakens in Richtung auf die Transportkette (38) in Transportrichtung hinter sowohl den Aufnahme- als auch den Abgabebereich erstreckt, um eine Pendelbewegung von Teilen der Würstchenkette in Transportrichtung hinter dem Aufnahmebereich zu begrenzen.

21. Vorrichtung nach mindestens einem der Ansprüche 9 bis 20,
dadurch gekennzeichnet, daß der Haken (10) in einer Ansicht parallel zur Transportrichtung im wesentlichen eine nach unten offene, U-förmige Gestalt hat, an dessen einem Schenkel das Befestigungselement (11) und an dessen anderem Schenkel sich der Abgabebereich (14) befindet und daß der Aufnahmebereich (12) im Bereich des Steges des U liegt.

22. Vorrichtung nach mindestens einem der Ansprüche 9 bis 21,
dadurch gekennzeichnet, daß der Haken (10) um eine senkrecht zur Transportrichtung verlaufende Horizontalachse in die Richtung kippbar ist, in die der Abgabebereich (14) abgewinkelt ist, so daß eine sich im Abgabebereich befindende Abdrehstelle vom Haken abrutschen kann.

23. Vorrichtung nach mindestens einem der Ansprüche 9 bis 22,
dadurch gekennzeichent, daß die Horizontalachse des Befestigungselements (11) den zum Tragen der Abdrehstelle dienenden Teil des Abgabebereiches (14) durchsetzt.

24. Vorrichtung nach mindestens einem der Ansprüche 9 bis 23,
gekennzeichnet durch eine Lichtschranke (35) zur Erfassung einer Abdrehstelle einer aus der Zuführeinrichtung (36) tretenden Würstchenkette, deren Signal der Steuereinrichtung zugeführt wird.

25. Vorrichtung nach Anspruch 24,
dadurch gekennzeichnet, daß die Steuereinrichtung den Antrieb der Haken (10) und/oder der Zuführeinrichtung (36) so steuert, daß ein Haken jeweils eine Abdrehstelle erfaßt.

26. Vorrichtung nach mindestens einem der Ansprüche 9 bis 25,
dadurch gekennzeichnet, daß die Einrichtung (30) zur Verschiebung einen zwischen zwei Positionen etwa senkrecht zur Transportrichtung pneumatisch oder dgl. bewegbaren Bügel aufweist.

27. Vorrichtung nach mindestens einem der Ansprüche 9 bis 26,
dadurch gekennzeichnet, daß die in einer horizontalen Ebene umlaufenden Haken (10) jeweils mittels ihres Befestigungselements (11) an einer Endloskette (38) befestigt sind, welche über zwei Umlenkräder (39) geführt ist, von denen eines angetrieben ist, und daß die Zuführeinrichtung (36) entlang des Bereiches des Umfanges eines Umlenkrades (39) verschiebbar ist, um die Lage der Übergabestelle mit Bezug auf die passierenden Haken festzulegen.

28. Vorrichtung nach mindestens einem der Ansprüche 9 bis 27,
dadurch gekennzeichnet, daß der Abstand der vorlaufenden Abdrehstelle jedes Abschnittes von der nachlaufenden Abdrehstelle auf den Haken in Transportrichtung im Bereich der Übergabestelle größer ist, als nach Verlassen des Bereiches der Übergabestelle.

## Claims

1. A process for hanging up sausage strings in loops, in which successive hooks circulating in a substantially horizontal transport plane catch at a transfer location in each case one twist-off point running approximately perpendicularly there between two sections of the sausage string and convey, where appropriate in pulsed manner, said twist-off point out of the perpendicular line passing through the transfer location, characterized in that the spacing between two twist-off points, which each include one section between them and which lie on receiving regions of the hooks, is set in the direction of transport at least in the region of the transfer location in such a way that each of the naturally curved sausages in the section of the sausage string located between two respective hooks assumes, under gravitational influence, a rotationally stable position about the spatial axis which runs through the two twist-off points which delimit the respective sausage and in that the twist-off point at the front end of the section, as seen in the direction of transport, is then turned about an approximately perpendicular axis through an angle in the order of 90° in a predetermined direction of rotation.

2. A process according to Claim 1, characterized in that the spacing of the leading twist-off point of each section from the trailing twist-off point on the hooks is reduced after leaving the region of the transfer location.

3. A process according to Claim 1 or 2, characterized in that the perpendicular axis is moved during the turning process parallel to itself in the direction towards the free hook end.

4. A process according to at least one of the preceding claims, characterized in that the turning movement is effected and/or supported by a downwardly directed movement of the twist-off point located at the leading end of the section.

5. A process according to Claim 4, characterized in that the downwardly directed movement is initiated by displacing the twist-off point into an oblique plane.

6. A process according to at least one of the preceding claims, characterized in that the sausages on both sides of said twist-off point are splayed off from one another towards the end of or after the turning movement at least in the proximity of the twist-off point, in order to ensure a sufficiently large opening for insertion of a smoking skewer.

7. A process according to at least one of the preceding claims, characterized in that the twist-off point is deposited on the smoking skewer by means of at least one further oblique plane.

8. A process according to Claim 7, characterized in that the further oblique plane is produced by turning a part, which carries the twist-off point, of a discharge region of the hook about an approximately horizontal axis.

9. An apparatus for hanging up sausage strings in loops, having
- successive hooks circulating in a horizontal plane,
- a supply device for supplying approximately perpendicularly positioned twist-off points, which are located between two sections of a sausage string, to a transfer location at which the twist-off points are caught by a hook,
- a control device for the lateral control of the supply device and/or the circulation of the hooks in such a way that each desired twist-off point of the sausage string is caught in each case by one hook,
characterized in that
- the spacing between two twist-off points, which each include one section between them and which lie on the hooks (10), is sufficiently large in the direction of transport at least in the region of the transfer location for each of the naturally curved sausages (5) in the section of the sausage string located between two respective hooks to assume, under gravitational influence, a rotationally stable position about the spatial axis which runs through the two twist-off points which delimit the respective sausage,
- the hooks (10), starting from their securing element (11) which is associated with a transport chain, have a receiving region (12) which runs, as seen in plan view, substantially perpendicularly to the direction of transport for the purpose of receiving a twist-off point, and a discharge region (14) offset, as seen in plan view, substantially at 90° thereto, in or opposed to the direction of transport, and in that
- a device (30) is provided for displacing the twist-off point from the receiving region (12) into the discharge region (14).

10. An apparatus according to Claim 9, characterized in that the hook (10) between the receiving region (12) and the discharge region (14) has at least one first, downwardly running oblique plane (16).

11. An apparatus according to Claim 10, characterized in that the first oblique plane (16), as seen in plan view of the hook, is offset in the direction in which the discharge region (14) is also offset, in such a way that the twist-off point guided from the receiving region to the discharge region undergoes only a part of its rotational movement through the first oblique plane (16).

12. An apparatus according to Claim 10, characterized in that the hook (10) has, adjoining the first oblique plane (16), a second oblique plane (18) which leads downwards more steeply than the first oblique plane (16) and which is adjoined by the discharge region (14).

13. An apparatus according to Claim 12, characterized in that the second oblique plane (18) runs perpendicularly.

14. An apparatus according to at least one of Claims 9 to 13, characterized in that the receiving region (12) has a catching location (20) for a twist-off point, this catching location (20) acting in the direction of transport of the hook (10).

15. An apparatus according to Claim 14, characterized in that the catching location (20), as seen in plan view, is formed by a curved region of the hook which widens in the direction of transport in an approximately funnel-type manner.

16. An apparatus according to at least one of Claims 9 to 15, characterized in that the receiving region (12) of the hook (10) is closed off in the direction towards the first oblique plane (16) by an upwardly directed hump (22).

17. An apparatus according to at least one of Claims 9 to 16, characterized in that the discharge region (14) has a prong (26) extending in the direction of transport for the purpose of receiving a twist-off point, this prong (26) rising slightly in the direction towards its free end.

18. An apparatus according to at least one of Claims 9 to 17, characterized in that the discharge region (14) has splaying elements (24, 25) which are arranged below the part of the discharge region (prong 26) provided for receiving the twist-off point, and on both sides thereof.

19. An apparatus according to Claim 18, characterized in that the splaying elements (24, 25) are the lower limbs of L-shaped formations which are arranged running over the prong (26) in a roof-like manner with the ridge line in the conveying direction.

20. An apparatus according to at least one of Claims 9 to 19, characterized by at least one deflector (28) which starts from the receiving region (12) and extends, as seen in plan view of the hook, in the direction towards the transport chain (38), as seen in the direction of transport behind both the receiving region and the discharge region, in order to restrict an oscillating movement of parts of the sausage string which are, as seen in the direction of transport, behind the receiving region.

21. An apparatus according to at least one of Claims 9 to 20, characterized in that the hook (10), in a view parallel to the direction of transport, substantially has a downwardly open, U-shaped form on one limb of which the securing element (11) is located and on the other limb of which the discharge region (14) is located and in that the receiving region (12) is in the region of the web of the U.

22. An apparatus according to at least one of Claims 9 to 21, characterized in that the hook (10) can be tilted about a horizontal axis running perpendicularly to the direction of transport in the direction in which the discharge region (14) is offset, with the result that a twist-off point located in the discharge region can slip off the hook.

23. An apparatus according to at least one of Claims 9 to 22, characterized in that the horizontal axis of the securing element (11) passes through the part of the discharge region (14) which serves to carry the twist-off point.

24. An apparatus according to at least one of Claims 9 to 23, characterized by a light barrier (35) for detecting a twist-off point of a sausage string emerging from the supply device (36), whereof the signal is supplied to the control device.

25. An apparatus according to Claim 24, characterized in that the control device controls the driving of the hooks (10) and/or of the supply device (36) in such a way that in each case one hook catches one twist-off point.

26. An apparatus according to at least one of Claims 9 to 25, characterized in that the device (30), for the purpose of displacement, has a bow-shaped piece which can be pneumatically or similarly moved between two positions approximately perpendicularly to the direction of transport.

27. An apparatus according to at least one of Claims 9 to 26, characterized in that the hooks (10) circulating in a horizontal plane are in each case secured by means of their securing element (11) to a continuous chain (38) which is guided by way of two deflection wheels (39), one of which is driven, and in that the supply device (36) is displaceable along the region of the periphery of a deflection wheel (39) in order to determine the position of the transfer location with respect to the passing hooks.

28. An apparatus according to at least one of Claims 9 to 27, characterized in that the spacing of the leading twist-off point of each section from the trailing twist-off point on the hooks is greater in the direction of transport in the region of the transfer location than after leaving the region of the transfer location.

## Revendications

1. Procédé de suspension de chaînes de saucisses en boucles, dans lequel des crochets circulant les uns à la suite des autres dans un plan de transport pour l'essentiel horizontal saisissent en un point de transmission chacun une zone de fermeture s'y étendant environ verticalement entre deux sections de la chaîne à saucisses, et l'extraient le cas échéant de façon cyclique de la ligne verticale passant par le point de transmission, caractérisé en ce que la distance entre deux zones de fermeture enserrant à chaque fois entre eux une section, et qui se trouvent dans des zones de réception des crochets, est ajustée dans la direction de transport, au moins au niveau du point de transmission, de telle sorte que chacune des saucisses naturellement incurvée prend sous l'influence de la gravité, dans la section de la chaîne à saucisses située à chaque fois entre deux crochets, une position stable par rotation autour de l'axe dans l'espace qui passe par les deux zones de fermeture délimitant la saucisse concernée, et qu'alors la zone de fermeture est tournée à l'extrémité avant de la section en regardant dans la direction de transport, autour d'un axe approximativement vertical, d'un angle de l'ordre de 90° dans une direction de rotation prédéterminée.

2. Procédé selon la revendication 1, caractérisé en ce que la distance de la zone de fermeture arrière de chaque section à la zone de fermeture avant est réduite sur le crochet après avoir quitté la zone du point de transmission.

3. Procédé selon la revendication 1 ou 2, caractérisé en ce que l'axe vertical est déplacé, lors de la phase de rotation, parallèlement à soi-même en direction de l'extrémité libre du crochet.

4. Procédé selon au moins l'une des revendications précédentes, caractérisé en ce que le mouvement de rotation est provoqué et/ou soutenu par un mouvement vers le bas de la zone de fermeture se trouvant au niveau de l'extrémité avant de la section.

5. Procédé selon la revendication 4, caractérisé en ce que le mouvement vers le bas est initié par déplacement de la zone de fermeture sur un plan incliné.

6. Procédé selon au moins l'une des revendications précédentes, caractérisé en ce que les saucisses sont écartées les unes des autres des deux côtés de ladite zone de fermeture à la fin du mouvement de rotation, ou après celui-ci, au moins à proximité de la zone de fermeture, pour garantir une ouverture d'introduction suffisante pour une brochette à fumer.

7. Procédé selon au moins l'une des revendications précédentes, caractérisé en ce que la zone de fermeture est déposée au moyen d'au moins un autre plan incliné sur la brochette à fumer.

8. Procédé selon la revendication 7, caractérisé en ce que l'autre plan incliné est produit par rotation d'une partie, portant la zone de fermeture, d'une zone de délivrance du crochet, autour d'un axe approximativement horizontal.

9. Dispositif de suspension de chaînes de saucisses en boucles, comprenant : des crochets circulant les uns à la suite des autres dans un plan horizontal,
un dispositif d'introduction pour introduire des zones de fermeture, positionnées environ verticalement entre deux sections d'une chaîne de saucisses, à un point de transmission auquel celles-ci sont saisies par un crochet,
un dispositif de commande pour commander dans le temps le dispositif d'introduction et/ou la circulation des crochets, de telle manière que chaque zone de fermeture souhaitée de la chaîne de saucisses est saisie chacune par un crochet, caractérisé en ce que la distance entre deux zones de fermeture enserrant à chaque fois entre eux une section, et qui se trouvent sur les crochets (10), est telle dans la direction de transport, au moins au niveau du point de transmission, que chacune des saucisses (5) naturellement incurvée prend sous l'influence de la gravité, dans la section de la chaîne à saucisses située à chaque fois entre deux crochets, une position stable par rotation autour de l'axe dans l'espace qui passe par les deux zones de fermeture délimitant la saucisse concernée, les crochets (10), en partant de leur élément de fixation (11) associé à une chaîne de transport, présentent une zone de réception (12) pour l'essentiel perpendiculaire au dispositif de transport en vue de dessus, pour recevoir une zone de fermeture, ainsi qu'une zone de délivrance (14) pour l'essentiel à 90° en vue de dessus par rapport à celle-ci, formant un angle dans, ou opposé à, la direction de transport, et en ce qu'il est prévu un dispositif (30) de déplacement de la zone de fermeture de la zone de réception (12) à la zone de délivrance (14).

10. Dispositif selon la revendication 9, caractérisé en ce que le crochet (10) présente entre la zone de réception (12) et la zone de délivrance (14) au moins un premier plan incliné (16) dirigé vers le bas.

11. Dispositif selon la revendication 10, caractérisé en ce que le premier plan incliné (16), en vue de dessus du crochet, forme un angle dans la direction dans laquelle également la zone de délivrance (14) forme un angle, à savoir de telle manière que la zone de fermeture guidée de la zone de réception à la zone de délivrance ne subit de la part du premier plan incliné (16) qu'une partie de son mouvement de rotation.

12. Dispositif selon la revendication 10, caractérisé en ce que le crochet (10), à la suite du premier plan incliné (16), présente un deuxième plan incliné (18) qui est incliné plus fortement vers le bas que le premier plan incliné (16) et sur lequel se raccorde la zone de délivrance (14).

13. Dispositif selon la revendication 12, caractérisé en ce que le deuxième plan incliné (18) est vertical.

14. Dispositif selon au moins l'une des revendications 9 à 13, caractérisé en ce que la zone de réception (12) présente une zone de saisie (20) pour une zone de fermeture, agissant dans la direction de transport du crochet (10).

15. Dispositif selon la revendication 14, caractérisé en ce que la zone de saisie (20), en vue de dessus, est formée par une zone recourbée du crochet s'élargissant approximativement en entonnoir dans la direction de transport.

16. Dispositif selon au moins l'une des revendications 9 à 15, caractérisé en ce que la zone de réception (12) du crochet (10) se termine, dans la direction du premier plan incliné (16), par un bossage (22) tourné vers le haut.

17. Dispositif selon au moins l'une des revendications 9 à 16, caractérisé en ce que la zone de délivrance (14) présente une dent (26) s'étendant dans la direction de transport, destinée à recevoir une zone de fermeture et montant légèrement en direction de son extrémité libre.

18. Dispositif selon au moins l'une des revendications 9 à 17, caractérisé en ce que la zone de délivrance (14) présente des éléments d'écartement (24, 25) qui sont placés au-dessous, et des deux côtés, de la partie de la zone de délivrance (dent 26) qui est prévue pour recevoir la zone de fermeture.

19. Dispositif selon la revendication 18, caractérisé en ce que les éléments d'écartement (24, 25) sont les flancs inférieurs de parties en formes de L qui sont placées à la manière d'un toit, avec la ligne de faîte dans la direction de transport au-dessus des dents (26).

20. Dispositif selon au moins l'une des revendications 9 à 19, caractérisé par au moins un déflecteur (28), qui part de la zone de réception (12) et s'étend, en vue de dessus du crochet, en direction de la chaîne de transport (38) dans la direction de transport derrière à la fois la zone de réception et la zone de délivrance, pour limiter un mouvement pendulaire de parties de la chaîne de saucisses dans la direction de transport derrière la zone de réception.

21. Dispositif selon au moins l'une des revendications 9 à 20, caractérisé en ce que le crochet (10), en vue parallèlement à la direction de transport, a une forme pour l'essentiel en U ouvert vers le bas, sur le premier flanc de laquelle se trouve l'élément de fixation (11) et sur le deuxième flanc de laquelle se trouve la zone de délivrance (14), et en ce que la zone de réception (12) se trouve au niveau de la barre du U.

22. Dispositif selon au moins l'une des revendications 9 à 21, caractérisé en ce que le crochet (10) peut basculer autour d'un axe horizontal perpendiculaire à la direction de transport, dans la direction dans laquelle la zone de délivrance (14) forme un angle, de sorte qu'une zone de fermeture se trouvant dans la zone de délivrance peut glisser du crochet.

23. Dispositif selon au moins l'une des revendications 9 à 22, caractérisé en ce que l'axe horizontal de l'élément de fixation (11) passe par la partie de la zone de délivrance (14) qui sert à porter la zone de fermeture.

24. Dispositif selon au moins l'une des revendications 9 à 23, caractérisé par une barrière lumineuse (35) destinée à détecter une zone de fermeture d'une chaîne de saucisses arrivant du dispositif d'introduction (36), dont le signal est envoyé au dispositif de commande.

25. Dispositif selon la revendication 24, caractérisé en ce que le dispositif de commande commande l'entraînement des crochets (10) et/ou du dispositif d'introduction (36) de telle manière qu'un crochet saisit à chaque fois une zone de fermeture.

26. Dispositif selon au moins l'une des revendications 9 à 25, caractérisé en ce que le dispositif (30) de déplacement présente un arceau mobile pneumatiquement, ou de manière analogue, entre deux positions environ perpendiculairement à la direction de transport.

27. Dispositif selon au moins l'une des revendications 9 à 26, caractérisé en ce que les crochets (10) circulant dans un plan horizontal sont fixés chacun au moyen de leurs éléments de fixation (11) à une chaîne sans fin (38), qui passer sur deux poulies de renvoi (39) dont l'une est entraînée, et en ce que le dispositif d'introduction (36) peut se déplacer le long de la zone de la circonférence d'une poulie de renvoi (39) pour déterminer la position du point de transmission par rapport aux crochets qui passent.

28. Dispositif selon au moins l'une des revendications 9 à 27, caractérisé en ce que la distance de la zone de fermeture avant à la zone de fermeture arrière de chaque section, sur le crochet et dans la direction de transport, est plus grande au niveau du point de transmission qu'après avoir quitté la zone du point de transmission.
